# EUROPÄISCHE PATENTSCHRIFT

(11) **EP 2 521 902 B1**
(45) Veröffentlichungstag und Bekanntmachung des Hinweises auf die Patenterteilung: **09.10.2013**
(21) Anmeldenummer: 10779284.8
(22) Anmeldetag: 05.11.2010
(51) Int. Cl.: G01L 3/10, G01L 5/22, G01B 7/30, G01D 5/24

(54) **DREHWINKELSENSOR**
ROTATION ANGLE SENSOR
CAPTEUR D'ANGLE DE ROTATION

(30) Priorität: 05.01.2010 DE 102010000671
(43) Veröffentlichungstag der Anmeldung: 14.11.2012
(73) Patentinhaber: Robert Bosch GmbH, 70442 Stuttgart (DE)
(72) Erfinder: LUDWIG, Ronny, 72411 Bodelshausen (DE)
(86) Internationale Anmeldenummer: PCT/EP2010/066870
(87) Internationale Veröffentlichungsnummer: WO 2011/082862

(56) Entgegenhaltungen:
- EP-A2- 1 396 703
- WO-A2-98/43046
- JP-A- 61 076 928
- US-A- 3 421 371

## Beschreibung

Die Erfindung betrifft einen Drehwinkelsensor, einen Drehmomentsensor, ein Verfahren zum Bestimmen eines Drehwinkels und ein Verfahren zum Bestimmen eines Drehmoments.

### Stand der Technik

Im Bereich der Drehmoment- und Drehwinkelsensoren kommen heutzutage üblicherweise magnetische Messmethoden zum Einsatz. Ein Beispiel hierfür ist der Drehmomentsensor TSS-1 der Robert Bosch GmbH, bei dem ein sich bei einer Drehbewegung änderndes magnetisches Feld mit Hall-Sensoren erkannt und ein gemessenes Signal in ein Drehwinkel- oder Drehmomentsignal umgerechnet wird. Diese Sensoren zeichnen sich vor allem durch ihre hohe Winkelauflösung aus, die zum Teil weniger als 0,01° betragen kann.

Für großbauende, hochvolumige Massenanwendungen ergeben sich für derartige Sensoren jedoch hohe Herstellungskosten, die durch komplizierte und teure Bauteile, wie z. B. einen gegenläufig gepolten Magnetring oder den zur Leitung des magnetischen Flusses notwendigen metallischen Flussleitelementen, bedingt sind. Weiterhin ist auch die komplizierte Aufbau- und Verbindungstechnik zu berücksichtigen, da die messenden Hall-Elemente mit sehr hoher Positionsgenauigkeit zum magnetischen Fluss ausgerichtet werden und über eine gesamte Lebenszeit eines Sensors diese Position behalten müssen, um somit einen Drift des Sensors zu vermeiden.

Eine Sensoranordnung zur Erfassung eines Differenzwinkels ist in der Druckschrift DE 10 2005 031 086 A1 beschrieben. Diese Sensoranordnung umfasst mindestens ein magnetfeldempfindliches Sensorelement, mit dem die Magnetfeldinformationen eines Magnetkreises, der aus einem Magnetpolrad und ferromagnetischen Fluxringen mit Zähnen besteht, auswertbar ist. Dabei verlaufen die Zähne zum radialen Abgriff der Magnetfeldinformation des Magnetpolrads in radialer Richtung.

Ein kapazitiver Winkelpositionssensor ist aus der Druckschrift EP 1 396 703 A2 bekannt. Dieser Sensor umfasst zwei kreisrunde kapazitive Platten sowie einen halbkreisförmigen Rotor aus dielektrischem Material, der an einer Welle mit dieser Welle drehbar angeordnet ist. Die beiden Platten sind zu der Welle ortsfest angeordnet. Somit wird eine Kapazität zwischen den beiden Platten durch eine winkelabhängige Position des dielektrischen Rotors festgelegt, wodurch wiederum ein Winkel der Welle bestimmt werden kann.

Ein System zum Bestimmen einer Geschwindigkeit und einer Winkelposition einer Welle ist in der Druckschrift US 3 421 371 beschrieben. Dabei werden die Geschwindigkeit und Winkelposition der Welle ebenfalls kapazitiv erfasst. Hierzu umfasst das System ebenfalls zwei zu der Welle ortsfest angeordnete Platten eines Kondensators sowie einen zwischen diesen beiden Platten angeordneten dielektrischen Rotor, der an der Welle drehbar befestigt ist. Hierbei ist vorgesehen, dass der Rotor als kreisförmige Scheibe ausgebildet ist, wobei dieser Rotor an einem Punkt mit der Welle befestigt ist, der zu dem Mittelpunkt des Rotors versetzt ist.

In der Druckschrift WO 98/43046 A2 ist ein kapazitiver Drehwinkel- und Winkelgeschwindigkeitssensor beschrieben, der zwei voneinander isolierte kreisringsektorförmige Elektroden mit vorbestimmten Zentriwinkeln aufweist. Zwischen diesen beiden Elektroden ist auf einer Welle ein Rotor angeordnet, der zumindest einen zur Drehachse der Welle ausgerichteten, sektorförmigen Flügel aufweist.

Ein Drehmomentsensor ist Gegenstand der Druckschrift JP 61076928 A, der einen ersten und einen zweitem Drehwinkelsensor umfasst, die über einen Torsionsstab miteinander verbunden sind.

### Offenbarung der Erfindung

Vor diesem Hintergrund werden ein Drehwinkelsensor und ein Drehmomentsensor sowie Verfahren zum Bestimmen eines Drehwinkels und eines Drehmoments mit den Merkmalen der unabhängigen Patentansprüche vorgestellt. Weitere Ausgestaltungen der Erfindung ergeben sich aus den abhängigen Patentansprüchen und der Beschreibung.

Die Erfindung betrifft u. a. einen kapazitiv, über die drehwinkelabhängige Änderung der Permittivität messenden Drehmomentsensor, der z. B. für die elektronische Lenkunterstützung in einem Fahrzeug eingesetzt werden kann.

Ein Messprinzip des kapazitiv messenden Drehmomentsensors beruht auf einer drehwinkelabhängigen, üblicherweise räumlichen Änderung des zwischen Kondensatorplatten eines Kondensators angeordneten, drehbaren Dielektrikums. Daraus ergibt sich eine Änderung der Permittivität ε, die auch als dielektrische Leitfähigkeit bezeichnet wird, wodurch eine geänderte Kapazität des Kondensators hervorgerufen werden kann. Der Drehwinkel kann in Abhängigkeit eines zwischen den Kondensatorplatten angeordneten Flächenanteils des Dielektrikums bestimmt werden.

Bezüglich einer Form von Komponenten des üblicherweise als Plattenkondensator ausgebildeten Kondensators mit sich bewegendem Dielektrikum sind verschiedene vergleichende Ausführungbeispiele möglich. Diese betreffen u. a. eine Form des übli-cherweise flachen, als Scheibe ausgebildeten Dielektrikums. Weiterhin ist auch eine Befestigung der Scheibe an einer über eine Welle definierten Achse zu berücksichtigen. Üblicherweise wird die Scheibe in Abhängigkeit ihrer Form derart an der Achse der Welle befestigt, dass die Scheibe senkrecht zu der Achse eine winkelabhängige Ausdehnung aufweist. Dies umfasst auch die Möglichkeit, dass der Radius der Scheibe ausgehend von einem Drehpunkt der Achse winkelabhängig ist. Somit ist es möglich, Scheiben unterschiedlicher Form, bspw. kreisförmige Scheiben, an dem Drehpunkt asymmetrisch zu befestigen. Falls vorge sehen ist, eine Scheibe an dem Drehpunkt symmetrisch zu befestigen, ist zu beachten, dass die Scheibe bzgl. ihres Mittelpunkts unterschiedliche, winkelabhängige Ausdehnungen und somit auch Radien aufweist.

Typischerweise ist die als Dielektrikum ausgebildete Scheibe des mindestens einen Kondensators des Drehwinkelsensors an der Welle befestigt. In Abhängigkeit eines Drehwinkels der Welle werden auch die Permittivität und die Kapazität des mindestens einen Kondensators verändert. Somit kann ein Drehwinkel der Welle über die gemessene Kapazität bestimmt werden.

Bei einer ersten Beispielform eines Drehmomentsensors mit einem beschriebenen Kondensator ist vorgesehen, dass auf einer Welle und somit der Achse eine asymmetrisch gelagerte kreisrunde bzw. kreisförmige Scheibe, die z. B. aus Kunststoff besteht, angeordnet ist. Beidseitig dieser Scheibe befinden sich die Kondensatorplatten. In Abhängigkeit des Drehwinkels der Welle ist ein bestimmter Flächenanteil der Scheibe zwischen den Kondensatorplatten angeordnet, ein formaler und/oder funktioneller Zusammenhang zwischen dem Flächenanteil und dem Winkel, bspw. eine funktionelle Abhängigkeit des Drehwinkels von dem Flächenanteil des Dielektrikums, kann durch Messung und/oder Berechnung bestimmt werden, wobei typischerweise eine winkelabhängige Ausdehnung der Scheibe ausgehend vom Drehpunkt der Achse zu berücksichtigen ist. Da die Scheibe als Dielektrikum eine andere Permittivität als Luft besitzt, ändert sich die Kapazität dieses Kondensators in Abhängigkeit des Flächenanteils bzw. der Ausdehnung der Scheibe zwischen den beiden Kondensatorplatten. Somit ist die messbare Kapazität vom Drehwinkel der Welle abhängig.

Für die Messung eines Drehmoments ist eine Ausführungsform eines Drehmomentsensors mit zwei als Drehwinkelsensoren ausgebildeten Messanordnungen, die auf zwei Wellen mit Achsen angeordnet sind, vorgesehen. Diese Achsen sind üblicherweise zueinander koaxial angeordnet und mittels eines Torsionsstabs bzw. einer Drehstabfeder miteinander verbunden. Liegt an dem Drehmomentsensor kein Drehmoment an, ist die Kapazität beider Messsysteme bzw. -anordnungen für die Drehwinkel exakt gleich, d. h. die Kapazitätsdifferenz als Messgröße ist dann gleich null. Wird jedoch an eine Welle ein Drehmoment angelegt, verdrehen sich je nach Auslegung des Torsionsstabs die Wellen beider Messanordnungen und demnach Drehmomentsensoren relativ zueinander. In Abhängigkeit einer Differenz der Drehwinkel ist somit eine Differenz der Kapazitäten zwischen beiden Messanordnungen messbar. Die Höhe dieser Differenz und/oder eine Phasenverschiebung der gemessenen Drehwinkel ist ein Maß für das anliegende Drehmoment. Üblicherweise sind die beiden Scheiben der zur Bestimmung des Drehmoments vorgesehenen Drehwinkelsensoren über die Wellen, die wiederum über den Torsionsstab miteinander verbunden sind, miteinander mittelbar bzw. indirekt verbunden.

Mit der Erfindung kann ein kontaktloses Messverfahren umgesetzt werden, das keiner Reibung unterliegt und durch das keine Geräusche verursacht werden. Die vorgesehene Messanordnung weist einen kompakten, robusten Aufbau auf und ist kostengünstig herstellbar, da im direkten Vergleich zu magnetisch messenden Systemen keine Magnete, Hall-ICs, Flußleiter usw. und demnach keine teuren Bauelemente verwendet werden müssen.

Eine Messanordnung, d. h. ein Drehwinkel- oder Drehmomentsensor, umfasst eine relativ einfache Aufbau- und Verbindungstechnik. Bei einer Bestimmung des Drehmoments kommt ein relativ messendes Konzept zum Einsatz. Somit spielen Umwelteinflüsse, z. B. Temperaturänderungen, Luftfeuchtigkeit usw., auf die auszuwertende Differenz der Kapazität keine Rolle.

Durch Verdoppelung der Drehwinkelsensoren kann eine redundant ausgebildete Vorrichtung einfach bereitgestellt werden. Eine elektronische Einheit, typischerweise eine Auswerteschaltung, ist von der Messanordnung räumlich trennbar. Somit sind u. a. keine Probleme mit elektrisch leitfähigen Spänen zu erwarten.

Im Rahmen der Erfindung wird ein Drehmomentsensor mit einem zum magnetischen Messprinzip alternativen Messprinzip mit einer akzeptablen Winkelauflösung bereitgestellt. Dabei wird der Einfluss der Permittivität auf die zu messende Kapazität von Kondensatoranordnungen zur Detektion eines Winkels einer sich um eine Welle drehenden Anordnung genutzt. Die Messanordnung, typischerweise mindestens ein Drehwinkelsensor, kann bei unterschiedlichen Sensoren zum Erfassen von Drehbewegungen zum Einsatz kommen.

Der erfindungsgemäße Drehwinkelsensor ist dazu ausgebildet, sämtliche Schritte des vorgestellten Verfahrens zum Bestimmen des Drehwinkels durchzuführen. Dabei können einzelne Schritte des Verfahrens auch von einzelnen Komponenten des Drehwinkelsensors durchgeführt werden. Weiterhin können Funktionen des Drehwinkelsensors oder Funktionen von einzelnen Komponenten des Drehwinkelsensors als Schritte des Verfahrens zum Bestimmen des Drehwinkels umgesetzt werden. Außerdem ist es möglich, dass Schritte des Verfahrens als Funktionen wenigstens einer Komponente des Drehwinkelsensor oder des gesamten Drehwinkelsensors realisiert werden. Typischerweise umfasst der erfindungsgemäße Drehmomentsensor mindestens einen erfindungsgemäßen Drehwinkelsensor. Demnach ist der Drehmomentsensor dazu geeignet, Schritte des Verfahrens zum Bestimmen des Drehmoments durchzuführen. Ebenfalls können Funktionen mindestens einer Komponente des Drehmomentsensors auch als Schritte des Verfahrens zum Bestimmen des Drehmoments realisiert werden.

Weitere Vorteile und Ausgestaltungen der Erfindung ergeben sich aus der Beschreibung und den beiliegenden Zeichnungen.

### Kurze Beschreibung der Zeichnungen

Figur 1 zeigt in schematischer Darstellung ein erstes Beispiel eines Drehwinkelsensors aus zwei Perspektiven.
Figur 2 zeigt in schematischer Darstellung ein erstes Beispiel eines Drehmomentsensors.
Figur 3 zeigt in schematischer Darstellung den Drehmomentsensor aus Figur 2 in einer Schnittansicht.
Figur 4 zeigt in schematischer Darstellung den Drehmomentsensor aus den Figuren 2 und 3 in Draufsicht bei einem Bestimmen eines Drehmoments.
Figur 5 zeigt in schematischer Darstellung ein Detail zum Bestimmen des Drehmoments.
Figur 6 zeigt in schematischer Darstellung ein Diagramm zum Bestimmen des Drehmoments.
Figur 7 zeigt in schematischer Darstellung eine Ausführungsform eines erfindungsgemäßen Drehwinkelsensors aus zwei Perspektiven.
Figur 8 zeigt in schematischer Darstellung eine Ausführungsform des erfindungsgemäßen Drehmomentsensors.
Figur 9 zeigt in schematischer Darstellung den Drehmomentsensor aus Figur 8 in einer Schnittansicht.
Figur 10 zeigt in schematischer Darstellung den Drehmomentsensor aus den Figuren 8 und 9 in Draufsicht bei Durchführung einer Ausführung des erfindungsgemäßen Verfahrens zum Bestimmen eines Drehmoments.
Figur 11 zeigt in schematischer Darstellung ein Detail zu der Ausführungsform des erfindungsgemäßen Verfahrens zum Bestimmen eines Drehmoments.
Figur 12 zeigt ein Diagramm zu der Ausführungsform des erfindungsgemäßen Verfahrens zum Bestimmen eines Drehmoments.
Figur 13 zeigt ein Diagramm zum Vergleich der Ausführungsform des erfindungsgemäßen Verfahrens zum Bestimmen des Drehmoments mit dem Beispiel zum Bestimmen des Drehmoments.
Figur 14 zeigt in schematischer Darstellung ein weiteres Beispiel für einen aus dem Stand der Technik bekannten Drehmomentsensor.
Figur 15 zeigt in schematischer Darstellung ein Detail eines aus dem Stand der Technik bekannten Drehmomentsensors.

### Ausführungsformen der Erfindung

Die Erfindung ist anhand einer Ausführungsform in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

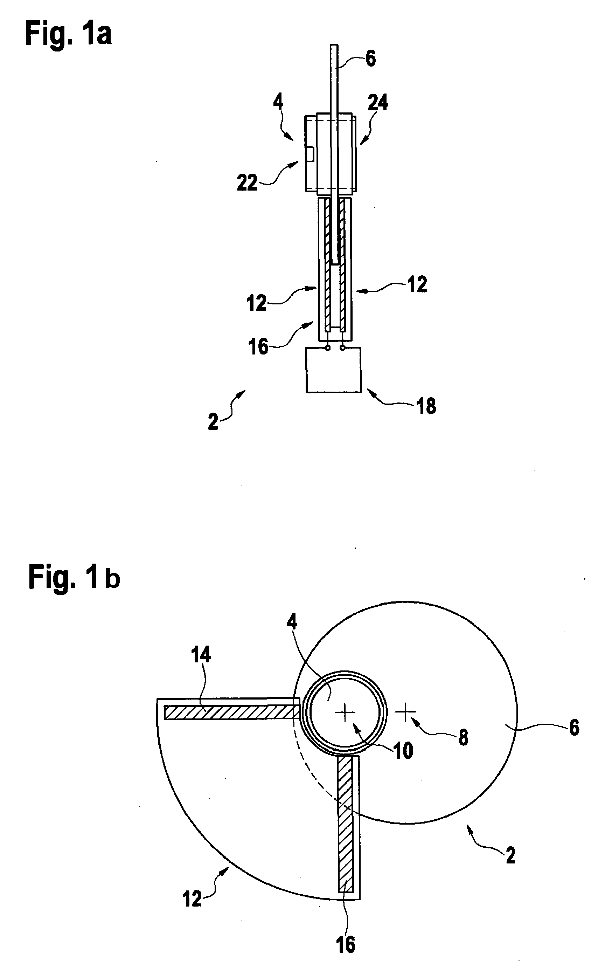

Figur 1 zeigt eine schematische Darstellung eines ersten Beispiels eines Drehwinkelsensors 2 in Draufsicht (Figur 1b) und in seitlicher Ansicht (Figur 1 a). Hierbei ist auf einer Welle 4 eine flache, kreisförmige Scheibe 6 aus Kunststoff befestigt, wobei die Scheibe 6 mit der Welle 4 eine gemeinsame Achse bzw. einen gemeinsamen Drehpunkt aufweist, der zu einem Mittelpunkt 8 der Scheibe 6 einen Abstand größer null aufweist. In vorliegendem Fall entspricht der Abstand ca. einem Drittel des Durchmessers der Scheibe 6. In der Regel kann ein Abstand zwischen einem Viertel und der Hälfte des Durchmessers der Scheibe 6 vorgesehen sein. Bei einer Drehung der Welle 4 führt die Scheibe 6 demnach eine asymmetrische Drehung um die Achse 10 aus.

Beidseitig dieser Scheibe 6 sind zwei zueinander parallel angeordnete Platten 12, bspw. aus Kunststoff, vorgesehen. Diese beiden Platten 12 umfassen hier schraffiert dargestellte metallische Bereiche, die parallel angeordnete Kondensatorplatten eines ersten, hier als Plattenkondensator ausgebildeten Kondensators 14 C1, und eines zweiten, hier als Plattenkondensator ausgebildeten Kondensators 16 C2, bilden. Somit befindet sich zwischen den Kondensatorplatten der Kondensatoren 14, 16 ein Dielektrikum, das aus einem Anteil bzw. Flächenanteil Luft und einem Anteil bzw. Flächenanteil der Scheibe 6 aus Kunststoff besteht. Die genannten Anteile ändern sich bei der Drehbewegung der Welle 4 und somit der Scheibe 6. Zur Bestimmung der winkelabhängigen Permittivität der Kondensatoren 14, 16 ist es ausreichend, den winkelabhängigen Flächenanteil der Scheibe 6 zu berücksichtigen. Da die Scheibe 6 eine andere Permittivität als Luft aufweist, ändert sich die Kapazität der Kondensatoren 14, 16 je nach Flächenanteil an Luft und Kunststoff zwischen den Platten 12. Bei jeweils geringster und größter Überdeckung zwischen der Flächen der Platten 12 und des Flächenanteils der Scheibe 6 aus Kunststoff ist die Änderung der gesamten Permittivität sehr gering, weshalb der zweite Kondensator 16 C2 in einem Winkel von 90° zu dem ersten Kondensator 14 C1 angeordnet ist. Ergänzend ist eine intelligente Einheit 18 zur Signalverarbeitung vorgesehen, die zur Auswertung der Änderung immer die größte Kapazitätsdifferenz der beiden Kondensatoren 14, 16 C1, C2 heranzieht und somit verwendet. In Figur 1a sind zudem eine Verdrehsicherungsnut 20 und eine Metallbuchse 22 gezeigt.

Bei dem Drehmomentsensor 2 aus Figur 1 ändert sich bei einer Drehbewegung der Achse 10 das Verhältnis der Dielektrika, das durch den Flächenanteil der Scheibe 6 zwischen den Platten 12 bestimmt wird. Da Luft eine andere Permittivität als z. B. Kunststoff besitzt, kann die Drehbewegung der asymmetrisch gelagerten Scheibe 6 als Änderung der Kapazität der Kondensatoren 14, 16 gemessen werden.

Für die Kapazität eines Kondensators 14, 16 gilt: C =ε₀ x εᵣ x A/d,
wobei ε₀ = 8,85418781762 AsNm die elektrische Feldkonstante, ε_{r Luft} = 1,00059 die Permittivität von Luft, ε_{r ABS} ca. 4,3 des bspw. verwendbaren Kunststoffs ABS, A die Fläche einer Kondensatorplatte eines Kondensators 14, 16 und d der Abstand gegenüberliegender Kondensatorplatten jeweils eines Kondensators 14, 16 ist.

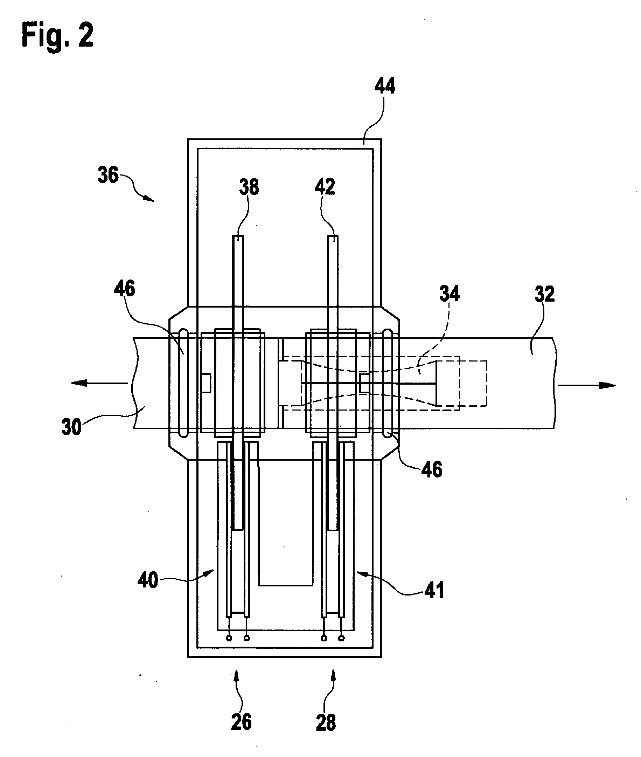

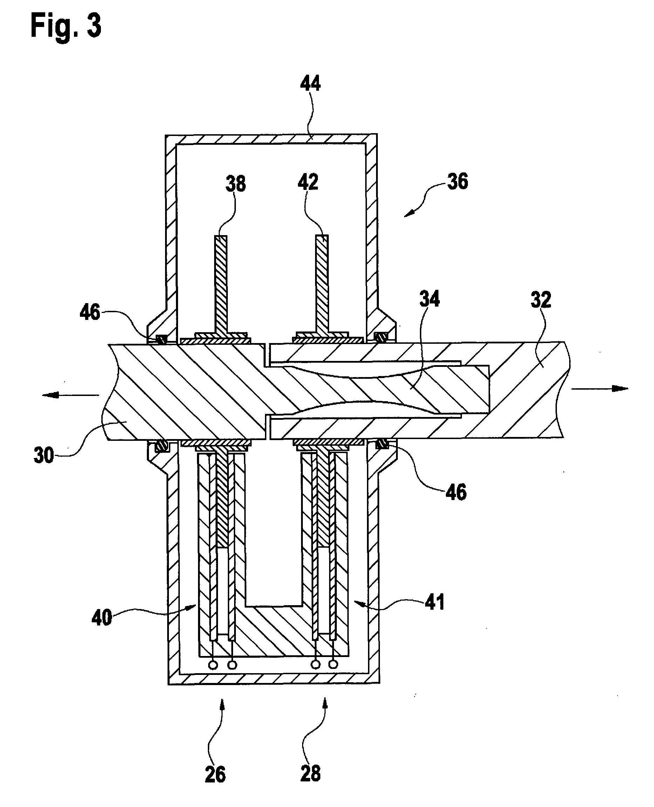

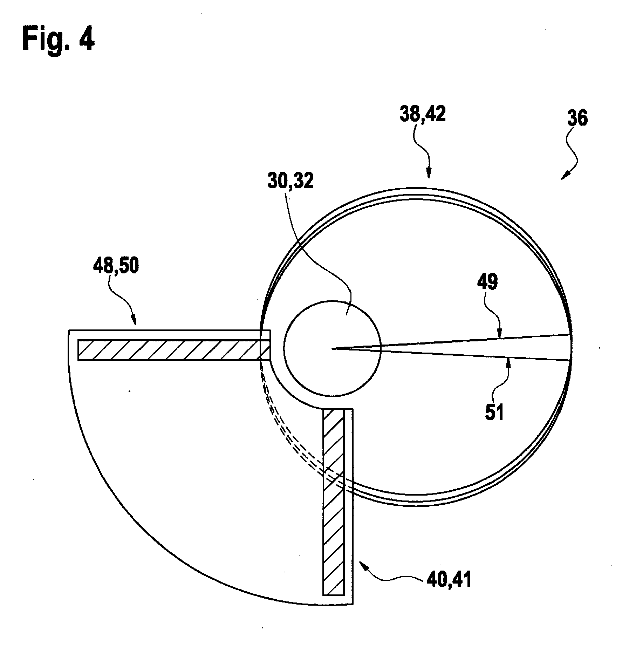

Soll ein Drehmoment gemessen werden, sind zwei als Drehwinkelsensoren 26, 28 ausgebildete Messanordnungen auf zwei Wellen 30, 32, die mit einem Torsionsstab 34 miteinander verbunden sind, vorgesehen. Ein durch die beiden Drehwinkelsensoren 26, 28 gebildeter Drehmomentsensor 36 ist in Figur 2 in Draufsicht und in Figur 3 in Schnittansicht dargestellt, wobei in dem beschriebenen Beispiel Drehwinkelsensoren 26, 28, die ähnlich wie der in Figur 1 dargestellte Drehwinkelsensor 2 ausgebildet sind, zum Einsatz kommen. Weiterhin ist der Drehmomentsensor 36 in Figur 4 in Draufsicht schematisch dargestellt.

Dabei umfasst ein erster Drehwinkelsensor 26 eine flache, kreisförmige Scheibe 38 als Dielektrikum, die zwischen einem ersten, hier als Plattenkondensator ausgebildeten Kondensators 40 und einem zweiten, hier als Plattenkondensator ausgebildeten Kondensators 48 (Figur 4), die relativ zu einer Achse der ersten Welle 30 um 90° versetzt angeordnet sind. Weiterhin ist die Scheibe 38 an der Welle 30 asymmetrisch gelagert. Entsprechend weist der zweite Drehwinkelsensor 28 ebenfalls eine an der zweiten Welle 32 asymmetrisch befestigte flache, kreisförmige Scheibe 42, die zwischen zwei um 90° versetzt angeordneten Kondensatoren 41, 50 (Figur 4) eine asymmetrische Drehbewegung ausführen kann. Es ist weiterhin vorgesehen, dass die erste Welle 30 mit einem Lenkgetriebe eines Fahrzeugs und die zweite Welle mit dem Lenkrad des Fahrzeugs verbunden ist.

Wird nun an der ersten Welle 30 ein Drehmoment angelegt, so verdreht sich die Scheibe 38 auf der ersten Welle 30 relativ zu der als Kunststoffplatte ausgebildeten zweiten Scheibe 42 auf der anderen, zweiten Welle 32, die über den Torsionsstab 34 mit der ersten Welle 30 und somit der ersten Scheibe 38 verbunden ist. Diese relative Änderung der Drehung führt zu einer Phasenverschiebung der messbaren Änderung der Kapazität über den Drehwinkel. Diese Phasenverschiebung ist ein Maß für die Größe des Drehmoments. Weiterhin ist der Drehmomentsensor 36 innerhalb eines Sensorgehäuses 44, das mit Dichtringen 46 zu den Achsen 30, 32 abgedichtet ist, angeordnet.

Eine Änderung der Permittivität der Luft durch Temperaturschwankungen und/oder Feuchte hat keinen Einfluss auf die Messung, da für das Drehmoment nur die relative Änderung zwischen den ersten Kondensatoren 40, 48 an der ersten Welle 30 und den zweiten Kondensatoren 41, 50 an der zweiten Welle 32 ausschlaggebend ist.

In Figur 4 ist zur Verdeutlichung eines beispielhaften Verfahrens zum Bestimmen eines Drehmoments der bereits in den Figuren 2 und 3 vorgestellte Drehmomentsensor 36 aus einer in Richtung der beiden Wellen 30, 32 orientierten Perspektive dargestellt. In dieser Perspektive sind demnach die Wellen 30, 32 sowie die ersten Kondensatoren 40, 41 und die dazu um 90° versetzten zweiten Kondensatoren 48, 50 über- bzw. hintereinander dargestellt. Figur 4 zeigt auch, dass die beiden Scheiben 38, 42 der beiden Drehwinkelsensoren 26, 28 nicht deckungsgleich zueinander angeordnet sind. Dieser Effekt tritt auf, wenn an den beiden Wellen 30, 32 ein Drehmoment anliegt.

Zur Durchführung des beispielhaften Verfahrens zum Bestimmen des Drehmoments wird in der Regel ein Signal über eine gemessene Kapazität, das einen winkelabhängigen Wert der Kapazitäten der Kondensatoren 40, 48 des ersten Drehwinkelsensors 24 und der Kondensatoren 41, 50 des zweiten Drehwinkelsensors 28 wiedergibt, zur Auswertung verwendet, wobei die Differenz ΔC der Kapazitäten bei Vorliegen einer Torsion, hier eine "Torsion von +3°" 49 sowie eine "Torsion von 3°" 51, zwischen den Wellen 30, 32 am größten ist.

In Ausgestaltung wird von dem ersten Drehwinkelsensor 26 eine Kapazität C1G des ersten Kondensators 40 und eine Kapazität C1A des zweiten Kondensators 48 verwendet. Von dem zweiten Drehwinkelsensor 28 wird eine Kapazität C2G des ersten Kondensators 41 und eine Kapazität C2A des zweiten Kondensators 50 verwendet. Weiterhin werden Verhältnisse ΔC1A/C1G, ΔC2A/C2G der ermittelten Kapazitäten C1 G, C1A, C2G, C2A herangezogen, wobei ein erstes Verhältnis ΔC1A/C1G aus einer Kapazität C1A des ersten Kondensators 40 des zweiten Drehwinkelsensors 28 und einer Kapazität C2G des ersten Kondensators 41 des ersten Drehwinkelsensors 26 gebildet wird. Zur Bildung des zweiten Verhältnisses ΔC2A/C2G wird eine Kapazität C2A des zweiten Kondensators 32 des zweiten Drehwinkelsensors 28 und eine Kapazität C2G des zweiten Kondensators 48 des ersten Drehmomentsensors 26 verwendet. Demnach ist vorgesehen, zur Bildung der genannten Verhältnisse ΔC1A/C1G, ΔC2A/C2G Kapazitäten von jeweils zwei Kondensatoren 40, 41, 48, 50 die bezüglich der Wellen 30, 32 hintereinander oder deckungsgleich angeordnet sind, zu berücksichtigen. Zur Auswertung wird jedoch immer das größte ermittelte Verhältnis ΔC1A/C1G, ΔC2A/C2G herangezogen.

Falls ΔC1A/C1G > ΔC2A/C2G, wird ΔC1A/C1G bei der Auswertung verwendet, falls ΔC1A/C1G < ΔC2A/C2G, wird ΔC2A/C2G bei der Auswertung verwendet.

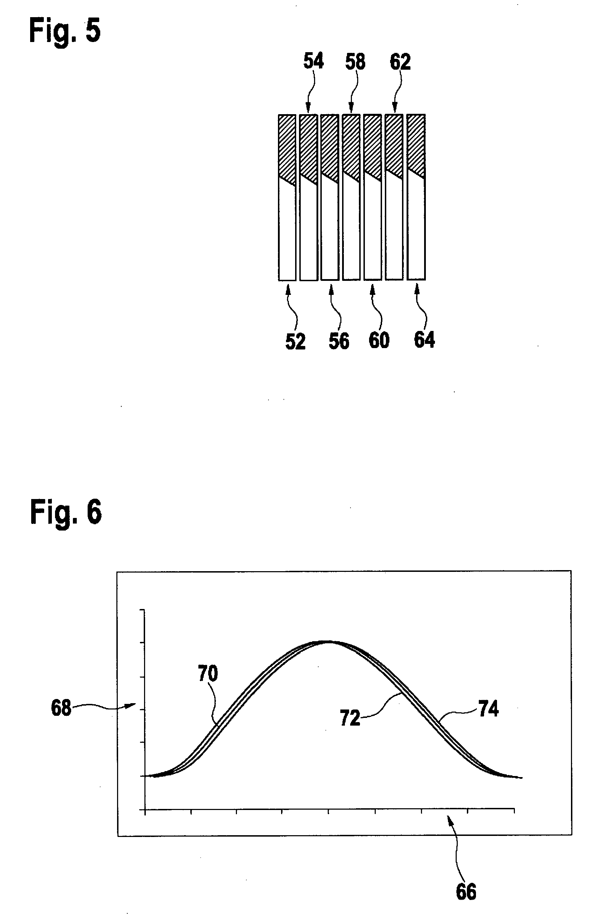

Weiterhin zeigt Figur 5 Beispiele für winkelabhängige Flächenanteile 52, 54, 56, 58, 60, 62, 64 einer in den Figuren 2 bis 4 gezeigten Scheibe 38, 42 zwischen zwei Kondensatorplatten eines Kondensators 40, 41, 48, 50 und somit eine Überdeckung der Kondensatorplatten mit der Scheibe 38, 42 (schraffierter Bereich). Ein weißer Bereich zeigt den Flächenanteil der Luft zwischen den Kondensatorplatten an. Dabei entspricht ein erster Flächenanteil 52 einer Abweichung des Drehwinkels von -3° zwischen den Wellen 30, 32, der zweite Flächenanteil 54 einer Abweichung des Drehwinkels von -2° zwischen den Wellen 30, 32, der dritte Flächenanteil 56 einer Abweichung des Drehwinkels von -1° zwi-schen den Wellen 30, 32, der vierte Flächenanteil 58 einer Abweichung des Drehwinkels von 0° zwischen den Wellen 30, 32, der fünfte Flächenanteil 60 einer Abweichung des Drehwinkels von +1° zwischen den Wellen 30, 32, der sechste Flächenanteil 62 einer Abweichung des Drehwinkels von +2° und der siebte Flächenanteil 64 einer Abweichung des Drehwinkels von +3°.

Das Diagramm aus Figur 6 umfasst eine horizontal orientierte Achse 66, entlang der Winkel für eine Umdrehung zwischen 0° und 360° aufgetragen sind. Entlang einer vertikal orientierten Achse 68 ist eine Amplitude aus einem der voranstehend genannten Verhältnisse ΔC1A/C1G, ΔC2A/C2G der ermittelten Kapazitäten C1A, C2A, C1G, C2G aufgetragen. In dem Diagramm sind eine erste Kurve 70 für einen Kreis 0°, eine zweite Kurve 72 für die "Torsion von +3°" 49 und eine dritte Kurve 74 für die "Torsion von -3°" 51 gezeigt.

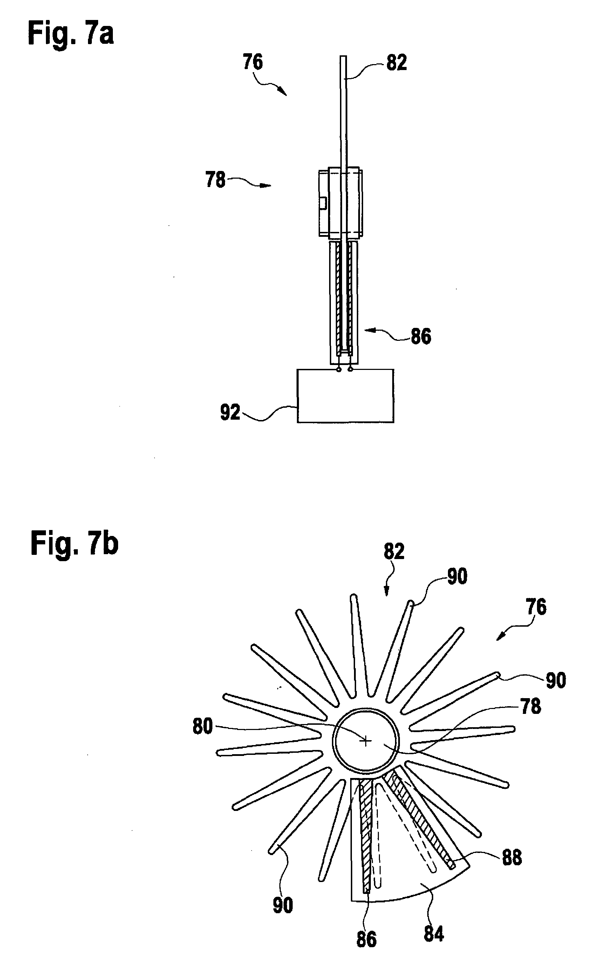

In Figur 7a ist in schematischer Darstellung eine Ausführungsform eines des erfindungsgemäßen Drehwinkelsensors 76 aus seitlicher Perspektive gezeigt. Figur 7b zeigt denselben Drehwinkelsensor 76 in Draufsicht. Dabei ist auf einer Welle 78 mit einer Achse 80 eine flache, sternförmige Scheibe 82 aus Kunststoff mit symmetrischem Drehpunkt angeordnet, der auch einem Drehpunkt bzw. der Achse 80 der Welle 78 entspricht. Beidseitig dieser Scheibe 82 befinden sich Platten 84 aus Kunststoff gleicher Größe, wobei metallische Bereiche dieser Platten 84 zusammen zwei als Plattenkondensatoren ausgebildete Kondensatoren 86, 88 bilden. Somit befindet sich zwischen den Kondensatorplatten je eines Kondensators 86, 88 ein Dielektrikum, das aus einem Anteil Luft und einem Anteil der Scheibe 82 aus Kunststoff besteht. Dieser Anteil ändert sich bei der Drehbewegung der Welle 78 und somit der Scheibe 82. Da die Scheibe 82 aus Kunststoff eine andere Permittivität als Luft aufweist, ändert sich die Kapazität der Kondensatoren 86, 88 je nach Flächenanteil an Luft und Kunststoff zwischen den Kondensatorplatten. Da jeweils bei geringster und größter Überdeckung zwischen den Flächen der Kondensatorplatten und der Scheibe 82 aus Kunststoff die Änderung der gesamten Permittivität sehr gering ist, sind für die Anordnung des Drehwinkelsensors 76 zwei Kondensatoren 86, 88 vorgesehen, die hier in einem Winkel zueinander angeordnet sind, der größer als ein Winkel zwischen zwei Sternspitzen 90 der sternförmigen Scheibe 82 ist. Zudem ist eine intelligente Einheit 92 zur Signalverarbeitung vorgesehen, die zur Auswertung der Änderung der größten Kapazitätsdifferenz verwendet wird.

Bei der Ausführungsform des Drehwinkelsensors 76 ergibt sich gegenüber dem vorgestellten Beispiel des Drehwinkelsensors 2 eine deutlich höhere Flankensteilheit der Phasen zueinander und somit eine größere Differenz der Kapazitäten bei vergleichbarem Winkel. Dadurch lassen sich höhere Winkelauflösungen als bei dem Drehwinkelsensor 2 erzielen.

Bei einer Drehbewegung der Achse ändert sich das Verhältnis der Dielektrika zwischen den Kondensatorplatten. Da Luft eine andere Permittivität als z. B. Kunststoff besitzt, kann die Flächenänderung der Sternspitzen 90 zu einem Kondensator 86, 88 durch die Drehbewegung als Änderung der Kapazität gemessen werden.

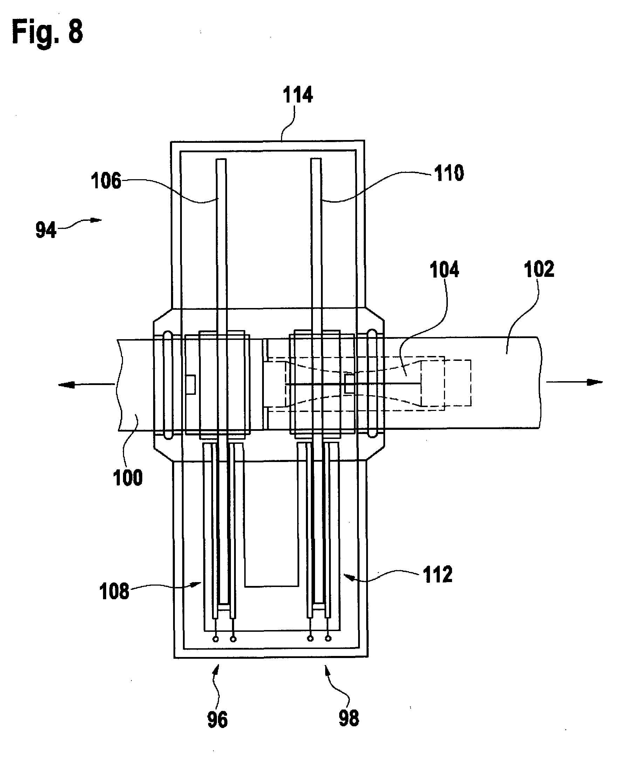

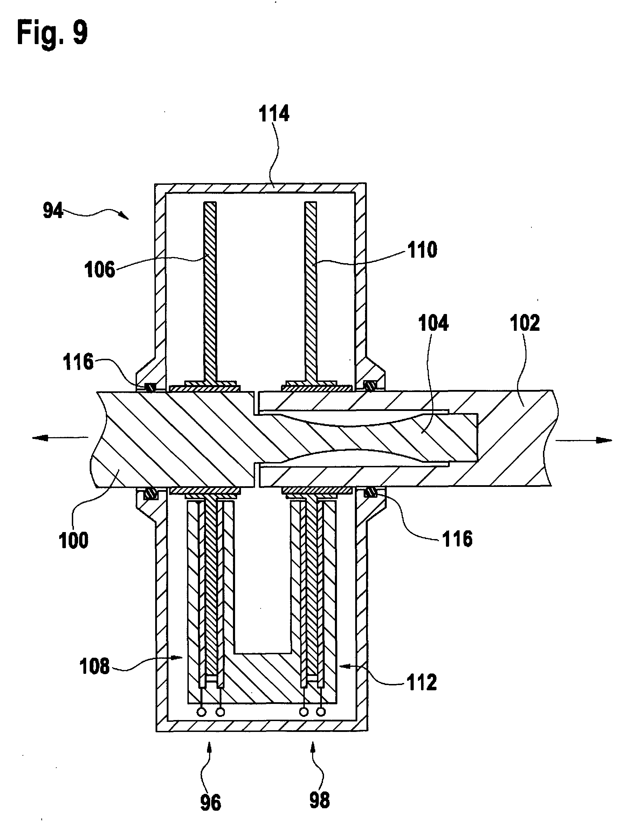

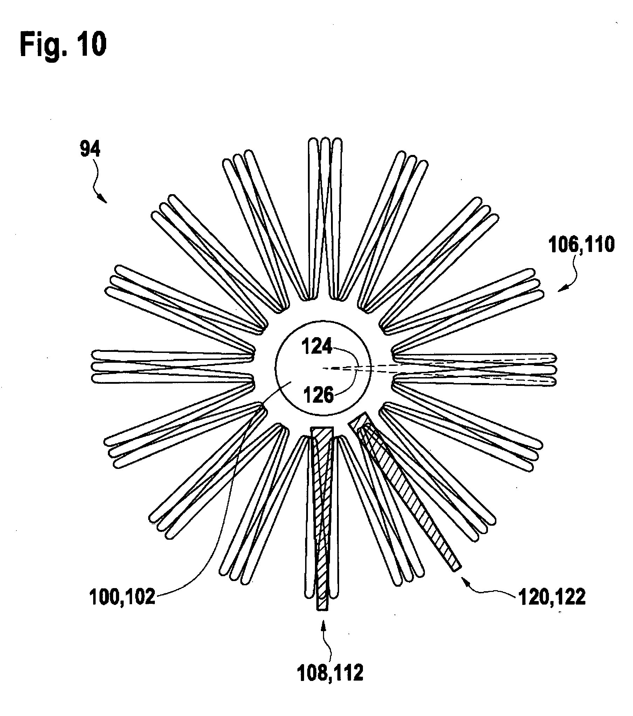

Die Figuren 8 und 9 zeigen in schematischer Darstellung eine zweite Ausführungsform des erfindungsgemäßen Drehmomentsensors 94 aus seitlicher Perspektive und in Schnittansicht. Zum Messen eines Drehmoments sind zwei Drehwinkelsensoren 96, 98 als Messanordnungen auf zwei Wellen 100, 102, die mit einem Torsionsstab 104 miteinander verbunden sind, vorgesehen. Diese Drehwinkelsensoren 96, 98 sind ähnlich wie der bereits in Figur 7 dargestellte Drehwinkelsensor 76 ausgebildet. Weiterhin zeigt Figur 10 den Drehmomentsensor 94 in Draufsicht. Die schematisch gezeigten zwei Messanordnungen umfassen jeweils eine auf den Wellen 100, 102 symmetrisch gelagerte flache, sternförmige Scheiben 106, 110 und eine Doppelanordnungen von jeweils zwei Paaren aus Kondensatoren 108, 120 (Figur 10), 112, 122 (Figur 10), die unter einem Winkelversatz zueinander versetzt angeordnet sind.

Dabei umfasst ein erster Drehwinkelsensor 96, der an einer ersten Welle 100 eines Lenkgetriebes angeordnet ist, eine sternförmige Scheibe 106, die an der ersten Welle 100 symmetrisch befestigt ist. Bei einer Drehung der ersten Welle 100 wird durch die Scheibe 106 zwischen den Kondensatorplatten der hier als Plattenkondensatoren ausgebildeten Kondensatoren 108, 120 (Figur 10) des ersten Drehwinkelsensors 96 eine sich ändernde Kapazität hervorgerufen. Eine sternförmige Scheibe 110 des zweiten Drehwinkelsensors 98 ist an der zweiten Welle 102 symmetrisch angeordnet und bewegt sich bei einer Drehung der zweiten Welle 102 zwischen Kondensatorplatte von zweiten Kondensatoren 112, 122 (Figur 10), die ebenfalls als Plattenkondensatoren ausgebildet sind. Dabei ist die zweite Welle 102 mit einem Lenkrad verbunden. Die beiden Drehwinkelsensoren 96, 98 sind in einem Gehäuse 114 angeordnet, das über Dichtungsringe 116 von den Achsen 100, 102 abgedichtet ist. Wird nun an die erste Welle 100 ein Drehmoment angelegt, so verdreht sich die sternförmige Scheibe 106 auf der ersten Welle 100 relativ zu der sternförmigen Scheibe 110 auf der anderen, zweiten Welle 102, die über den Torsionsstab 104 miteinander verbunden sind. Diese relative Änderung führt zu einer Phasenverschiebung der messbaren Änderung der Kapazitäten über dem Drehwinkel. Die Phasenverschiebung ist ein Maß für die Größe des an den Achsen 100, 102 anliegenden Drehmoments.

In Figur 10 ist zur Verdeutlichung der Ausführung des erfindungsgemäßen Verfahrens zum Bestimmen eines Drehmoments der bereits in den Figuren 8 und 9 vorgestellte Drehmomentsensor 94 aus einer in Richtung der beiden Wellen 100, 102 orientierten Perspektive dargestellt. In dieser Perspektive sind demnach die Wellen 100, 102 sowie die ersten Kondensatoren 108, 112 und die um einen Winkel versetzten zweiten Kondensatoren 120, 122 über- bzw. hintereinander dargestellt. Figur 10 zeigt auch, dass die beiden sternförmigen Scheiben 106, 110 der beiden Drehwinkelsensoren 96, 98 zueinander verdreht sind, dies ergibt sich, wenn an den beiden Wellen 100, 106 ein Drehmoment anliegt.

Zum Bestimmen des Drehmoments wird in der Regel ein Signal über eine gemessene Kapazität, das einen winkelabhängigen Wert der Kapazitäten der Kondensatoren 108, 120 des ersten Drehwinkelsensors 96 und der Kondensatoren 112, 122 des zweiten Drehwinkelsensors 98 wiedergibt, zur Auswertung verwendet, wobei die Differenz ΔC der Kapazitäten bei Vorliegen einer Torsion hier einer "Torsion von +3°" 124 sowie einer "Torsion von -3°" 126 zwischen den Wellen 100, 102 am größten ist.

In Ausgestaltung wird von dem ersten Drehwinkelsensor 96 eine Kapazität C1 G des ersten Kondensators 108 und eine Kapazität C1A des zweiten Kondensators 120 verwendet. Von dem zweiten Drehwinkelsensor 98 wird eine Kapazität C2G des ersten Kondensators 112 und eine Kapazität C2A des zweiten Kondensators 122 verwendet. Weiterhin werden Verhältnisse ΔC1A/C1G, ΔC2A/C2G der ermittelten Kapazitäten C1G, C1A, C2G, C2A herangezogen, wobei ein erstes Verhältnis ΔC1A/C1G aus einer Kapazität C1A des ersten Kondensators 112 des zweiten Drehwinkelsensors 98 und einer Kapazität C2G des ersten Kondensators 118 des ersten Drehwinkelsensors 96 gebildet wird. Zur Bildung des zweiten Verhältnisses ΔC2A/C2G wird eine Kapazität C2A des zweiten Kondensators 122 des zweiten Drehwinkelsensors 98 und eine Kapazität C2G des zweiten Kondensators 120 des ersten Drehmomentsensors 96 verwendet. Demnach ist vorgesehen, zur Bildung der genannten Verhältnisse ΔC1A/C1G, ΔC2A/C2G Kapazitäten von Kondensatoren 108, 112, 120, 122 die bezüglich der Wellen 100, 102 hintereinander oder deckungsgleich angeordnet sind, zu berücksichtigen. Zur Auswertung wird jedoch immer das größte aktuell vorliegende Verhältnis ΔC1A/C1G, ΔC2A/C2G herangezogen.

Im Detail gilt bspw., dass ΔC1A/C1G bei der Auswertung verwendet wird, wenn ΔC1A/C1G > ΔC2A/C2G. Falls ΔC1A/C1G < ΔC2A/C2G wird ΔC2A/C2G bei der Auswertung verwendet.

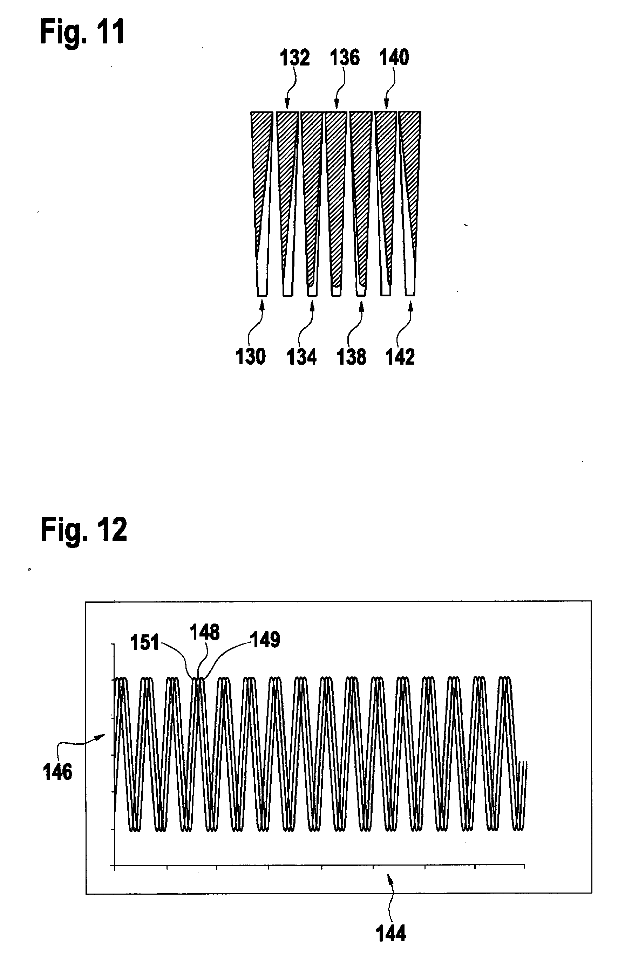

Ergänzend zeigt Figur 11 Beispiele für winkelabhängige Flächenanteile einer in den Figuren 8 bis 10 dargestellten Scheibe 100, 102 zwischen zwei Kondensatorplatten eines Kondensators 108, 112, 120, 122 und somit eine Überdeckung der Kondensatorplatten mit der Scheibe 100, 102 (schraffierter Bereich). Ein weißer Bereich zeigt den Flächenanteil der Luft zwischen den Kondensatorplatten an. Dabei entspricht ein erster Flächenanteil 130 einer Abweichung des Drehwinkels von -3° zwischen den Wellen 100, 102, der zweite Flächenanteil 132 einer Abweichung des Drehwinkels von -2° zwischen den Wellen 100, 102, der dritte Flächenanteil 134 einer Abweichung des Drehwinkels von -1° zwischen den Wellen 100, 102, der vierte Flächenanteil 130 einer Abweichung des Drehwinkels von 0° zwischen den Wellen 100, 102, der fünfte Flächenanteil 138 einer Abweichung des Drehwinkels von +1° zwischen den Wellen 100, 102, der sechste Flächenanteil 140 einer Abweichung des Drehwinkels von +2° und der siebte Flächenanteil 142 einer Abweichung des Drehwinkels von +3°.

Das Diagramm aus Figur 12 umfasst eine horizontal orientierte Achse 144, entlang der Winkel für eine Umdrehung zwischen 0° und 360° aufgetragen sind. Entlang einer vertikal orientierten Achse 146 ist eine Amplitude aus einem der voranstehend genannten Verhältnisse ΔC1A/C1G, ΔC2A/C2G der ermittelten Kapazitäten C1A, C2A, C1 G, C2G aufgetragen. In dem Diagramm sind eine erste Kurve 148, für den Fall, dass beide Scheiben 106, 110 deckungsgleich sind, eine zweite Kurve 149 für die "Torsion von +3°" 124 und eine dritte Kurve 151 für die "Torsion von -3°" 126 gezeigt.

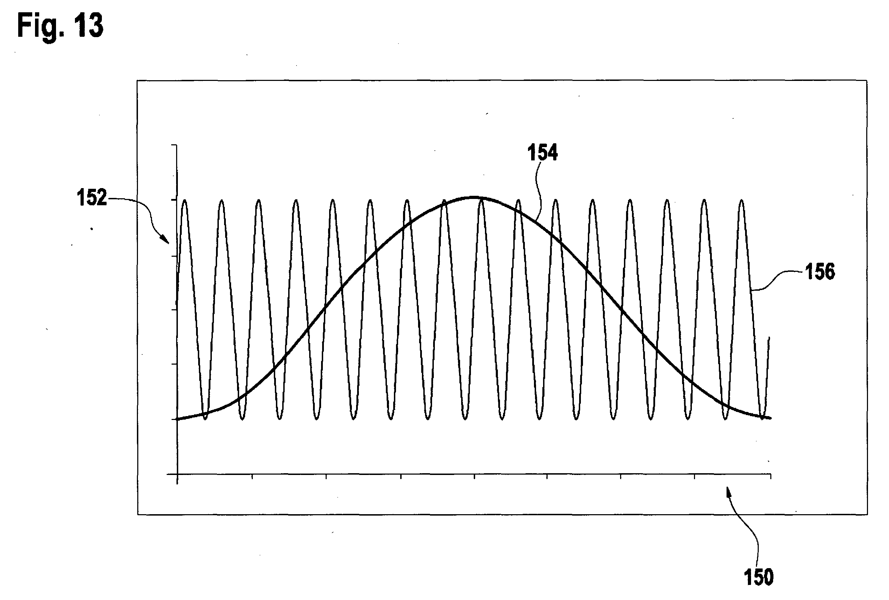

Das Diagramm aus Figur 13 umfasst eine horizontal orientierte Achse 150, entlang der ein Winkel von 0° bis 360° aufgetragen ist, sowie eine vertikal orientierte Achse 152, entlang der eine Amplitude für eine Kapazität aufgetragen ist. In dem Diagramm ist eine erste Kurve 154 für die Amplitude der Kapazität für das Beispiel des Drehmomentsensors 36 (Figur 2 bis 4) mit kreisförmiger Scheibe 38, 42 und eine zweite Kurve 156 für die Ausführungsform des Drehmomentsensors 94 (Figur 8 bis 10) dargestellt. Somit dient dieses Diagramm aus Figur 13 einem Vergleich des Standardsignals der messbaren Kapazität bei einer 360° Umdrehung für das Beispiel des Drehmomentsensors 36 aus Figur 2 bis 4 sowie für die Ausführungsform des Drehmomentsensors 94 aus Figur 8 bis 10. Die Flankensteilheit und damit die Kapazitätsänderung bzw. die Winkelauflösung ist bei der Ausführungsform mit sternförmig ausgebildeter Scheibe 106, 110 als Dielektrikum höher.

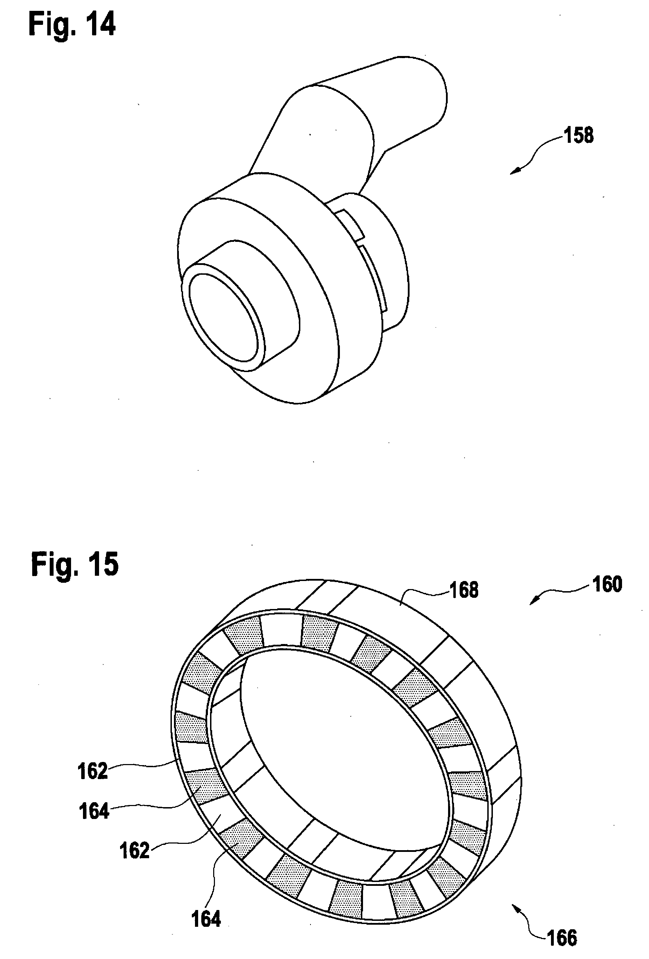

Figur 14 zeigt eine schematische Darstellung eines magnetisch messenden Drehmomentsensors 158 TSS-1 der Robert Bosch GmbH.

Figur 15 zeigt in schematischer Darstellung eine aus dem Stand der Technik bekannten Anordnung 160 zum Messen eines Drehmoments, die eine aus Nordpolen 162 und Südpolen164 bestehende Magneteinheit 166 und einen Messring 168 umfasst. Eine derartige Anordnung 160 kommt bspw. in dem in Figur 14 gezeigten Drehmomentsensor 158 zum Einsatz.

## Patentansprüche

1. Drehwinkelsensor, der zwei Kondensatoren (86, 88, 108, 112) mit Kondensatorplatten und ein als Scheibe (82, 106, 110) ausgebildetes Dielektrikum aufweist, wobei die Scheibe (82, 106, 110) zwischen den Kondensatorplatten drehbar angeordnet ist und je nach Drehwinkel unterschiedlich große Flächenanteile (130, 132, 134, 136, 138, 140, 142) zwischen den Kondensatorplatten ausfüllt, wobei der Drehwinkelsensor (76, 96, 98) dazu ausgebildet ist, den Drehwinkel in Abhängigkeit eines gemessenen Werts der Kapazität der Kondensatoren (86, 88, 108, 112) zu bestimmen,
**dadurch gekennzeichnet, dass**
das Dielektrikum der Kondensatoren (86, 88, 108, 112) als sternförmige Scheibe (106, 110) ausgebildet ist, wobei ein Mittelpunkt der sternförmigen Scheibe (106, 110) an einem Drehpunkt einer Welle (78, 100, 102) symmetrisch befestigt ist, wobei die zwei Kondensatoren unter einem Winkel angeordnet sind, der größer als ein Winkel zwischen zwei Sternspitzen (90) der sternförmigen Scheibe (106, 110) ist.

2. Drehmomentsensor, der einen ersten und einen zweiten Drehwinkelsensor (76, 96, 98) nach Anspruch 1 aufweist, wobei als Dielektrika ausgebildete Scheiben (82, 106, 110) der Drehwinkelsensoren (76, 96, 98) über einen Torsionsstab (104) miteinander verbunden sind.

3. Drehmomentsensor nach Anspruch 2, der dazu ausgebildet ist, mit dem ersten Drehwinkelsensor (76, 96, 98) eine erste Kapazität und mit dem zweiten Drehwinkelsensor (76, 96, 98) eine zweite Kapazität zu messen und aus einer Differenz der gemessenen Kapazitäten eine Differenz von Drehwinkeln zwischen den Scheiben (82, 106, 110) der Drehwinkelsensoren (96, 98) zu bestimmen.

4. Verfahren zum Bestimmen eines Drehwinkels einer Scheibe (82, 106, 110), die als Dielektrikum ausgebildet und zwischen Kondensatorplatten von Kondensatoren (86, 88, 108, 112) drehbar angeordnet ist, bei dem je nach Drehwinkel der Scheibe (6, 38, 42, 82, 106, 110) von der Scheibe (82, 106, 110) unterschiedlich große Flächenanteile (130, 132, 134, 136, 138, 140, 142) zwischen den Kondensatorplatten ausgefüllt werden, und bei dem der Drehwinkel in Abhängigkeit eines gemessenen Werts der Kapazität der Kondensatoren (86, 88, 108, 112) bestimmt wird,
**dadurch gekennzeichnet, dass**
das Dielektrikum der Kondensatoren (86, 88, 108, 112) als sternförmige Scheibe (106, 110) ausgebildet ist, wobei ein Mittelpunkt der sternförmigen Scheibe (106, 110) an einem Drehpunkt einer Welle (78, 100, 102) symmetrisch befestigt ist, wobei die zwei Kondensatoren unter einem Winkel angeordnet sind, der größer als ein Winkel zwischen zwei Sternspitzen (90) der sternförmigen Scheibe (106, 110) ist.

5. Verfahren zum Bestimmen eines Drehmoments zwischen einer ersten Scheibe (106, 110) und einer zweiten Scheibe (106, 110), die über einen Torsionsstab (104) miteinander verbunden sind, bei dem mit einem ersten Drehwinkelsensor (76, 96, 98) nach Patentanspruch 1, der die erste Scheibe (82, 106, 110) aufweist, eine erste Kapazität ermittelt wird, und bei dem mit einem zweiten Drehwinkelsensor (76, 96, 98) nach Patentanspruch 1, der die zweite Scheibe (82, 106, 110) aufweist, eine zweite Kapazität ermittelt wird, wobei aus einer Differenz der ermittelten Kapazitäten das Drehmoment bestimmt wird.

## Claims

1. Rotation-angle sensor which has two capacitors (86, 88, 108, 112) with capacitor plates, and has a dielectric which is in the form of a disc (82, 106, 110), wherein the disc (82, 106, 110) is arranged such that it can rotate between the capacitor plates and, depending on the rotation angle, fills surface-area components (130, 132, 134, 136, 138, 140, 142) of different sizes between the capacitor plates, wherein the rotation-angle sensor (76, 96, 98) is designed to determine the rotation angle in dependence on a measured value of the capacitance of the capacitors (86, 88, 108, 112), **characterized in that** the dielectric of the capacitors (86, 88, 108, 112) is in the form of a star-shaped disc (106, 110), wherein a centre point of the star-shaped disc (106, 110) is attached in a symmetrical manner to a centre of rotation of a shaft (78, 100, 102), wherein the two capacitors are arranged at an angle which is greater than an angle between two points (90) of the star-shaped disc (106, 110).

2. Torque sensor which has a first and a second rotation-angle sensor (76, 96, 98) according to Claim 1, wherein discs (82, 106, 110) of the rotation-angle sensors (76, 96, 98), which discs are in the form of dielectrics, are connected to one another by means of a torsion rod (104).

3. Torque sensor according to Claim 2, which is designed to measure a first capacitance using the first rotation-angle sensor (76, 96, 98), and to measure a second capacitance using the second rotation-angle sensor (76, 96, 98), and to determine a difference in rotation angles between the discs (82, 106, 110) of the rotation-angle sensors (96, 98) from a difference between the measured capacitances.

4. Method for determining a rotation angle of a disc (82, 106, 110) which is in the form of a dielectric and is arranged such that it can rotate between capacitor plates of capacitors (86, 88, 108, 112), in which method surface-area components (130, 132, 134, 136, 138, 140, 142) of different sizes between the capacitor plates are filled by the disc (82, 106, 110) depending on the rotation angle of the disc (6, 38, 42, 82, 106, 110), and in which method the rotation angle is determined in dependence on a measured value of the capacitance of the capacitors (86, 88, 108, 112), **characterized in that** the dielectric of the capacitors (86, 88, 108, 112) is in the form of a star-shaped disc (106, 110), wherein a centre point of the star-shaped disc (106, 110) is attached in a symmetrical manner to a centre of rotation of a shaft (78, 100, 102), wherein the two capacitors are arranged at an angle which is greater than an angle between two points (90) of the star-shaped disc (106, 110).

5. Method for determining a torque between a first disc (106, 110) and a second disc (106, 110), which discs are connected to one another by means of a torsion rod (104), in which method a first capacitance is identified using a first rotation-angle sensor (76, 96, 98) according to Patent Claim 1, which rotation-angle sensor has the first disc (82, 106, 110), and in which method a second capacitance is identified using a second rotation-angle sensor (76, 96, 98) according to Patent Claim 1, which rotation-angle sensor has the second disc (82, 106, 110), wherein the torque is determined from a difference between the identified capacitances.

## Revendications

1. Capteur d'angle de rotation, présentant deux condensateurs (86, 88, 108, 112) avec des plaques de condensateur et un diélectrique réalisé sous forme de disque (82, 106, 110), le disque (82, 106, 110) étant disposé de manière à pouvoir tourner entre les plaques de condensateur et, en fonction de l'angle de rotation, remplissant des proportions de surface de tailles différentes (130, 132, 134, 136, 138, 140, 142) entre les plaques de condensateur, le capteur d'angle de rotation (76, 96, 98) étant réalisé de manière à déterminer l'angle de rotation en fonction d'une valeur mesurée de la capacité des condensateurs (86, 88, 108, 112),
**caractérisé en ce que**
le diélectrique des condensateurs (86, 88, 108, 112) est réalisé sous forme de disque stellaire (106, 110), un centre du disque stellaire (106, 110) étant fixé de manière symétrique au niveau d'un centre de rotation d'un arbre (78, 100, 102), les deux condensateurs étant disposés suivant un angle supérieur à un angle entre deux pointes (90) de l'étoile du disque stellaire (106, 110).

2. Capteur de couple, présentant un premier et un deuxième capteur d'angle de rotation (76, 96, 98) selon la revendication 1, des disques (82, 106, 110) des capteurs d'angle de rotation (76, 96, 98) réalisés sous forme de diélectriques étant connectés les uns aux autres par le biais d'une barre de torsion (104).

3. Capteur de couple selon la revendication 2, réalisé de manière à mesurer avec le premier capteur d'angle de rotation (76, 96 98), une première capacité, et avec le deuxième capteur d'angle de rotation (76, 96 98), une deuxième capacité, et à déterminer à partir d'une différence entre les capacités mesurées, une différence d'angles de rotation entre les disques (82, 106, 110) des capteurs d'angle de rotation (96, 98).

4. Procédé pour déterminer un angle de rotation d'un disque (82, 106, 110), qui est réalisé sous forme de diélectrique et qui est disposé de manière à pouvoir tourner entre des plaques de condensateur de condensateurs (86, 88, 108, 112), dans lequel, en fonction de l'angle de rotation du disque (6, 38, 42, 82, 106, 110), des proportions de surface de tailles différentes (130, 132, 134, 136, 138, 140, 142) (82, 106, 110) sont remplies par le disque entre les plaques de condensateur, et dans lequel l'angle de rotation est déterminé en fonction d'une valeur mesurée de la capacité des condensateurs (86, 88, 108, 112),
**caractérisé en ce que**
le diélectrique des condensateurs (86, 88, 108, 112) est réalisé sous forme de disque stellaire (106, 110), un centre du disque stellaire (106, 110) étant fixé de manière symétrique au niveau d'un centre de rotation d'un arbre (78, 100, 102), les deux condensateurs étant disposés suivant un angle supérieur à un angle entre deux pointes (90) de l'étoile du disque stellaire (106, 110).

5. Procédé pour déterminer un couple entre un premier disque (106, 110) et un deuxième disque (106, 110), lesquels sont connectés l'un à l'autre par le biais d'une barre de torsion (104), dans lequel une première capacité est déterminée avec un premier capteur d'un angle de rotation (76, 96, 98) selon la revendication 1, qui présente le premier disque (82, 106, 110) et dans lequel une deuxième capacité est déterminée avec un deuxième capteur d'un angle de rotation (76, 96, 98) selon la revendication 1, qui présente le deuxième disque (82, 106, 110), le couple étant déterminé à partir d'une différence entre les capacités déterminées.
